# EUROPEAN PATENT APPLICATION

(11) **EP 2 682 278 A1**
(43) Date of publication of application: **08.01.2014**
(21) Application number: 13173180.4
(22) Date of filing: 21.06.2013
(51) Int. Cl.: B60B 27/00

(54) **Hub bearing assembly for a motor vehicle wheel**

(30) Priority: 06.07.2012 IT TO20120600
(71) Applicant: Aktiebolaget SKF, 41550 Göteborg (SE)
(72) Inventor: Ciulla, Luca, I-10137 Torino (IT); Finetti, William, I-10040 La Loggia (TO) (IT); Marivo, Massimo, I-10060 Airasca (TO) (IT)
(74) Representative: Tedeschini, Luca

(57) **Abstract**

Hub bearing assembly (10) for a motor vehicle wheel, the hub bearing assembly (10) having a flanged hub (20) which has a central portion (21) of cylindrical shape radially delimited outwardly by a cylindrical mounting surface (22), and a flange (30) which is fixed to the central portion (21) and has a shoulder (33) having an annular bearing surface (34) connected to the cylindrical mounting surface (22) by a curved fillet (40); a radially inner ring (52) of a bearing unit (50) being mounted on the cylindrical mounting surface (22) axially next to an intermediate element (70) which is mounted on the cylindrical mounting surface (22) in an intermediate position between the annular bearing surface (34) and the radially inner ring (52), and which has, in turn, a further annular bearing surface (72) which is transverse with respect to the axis (A) and to the cylindrical mounting surface (22) and which is placed in direct contact with the radially inner ring (52).

## Description

### BACKGROUND OF THE INVENTION

The present invention relates to a hub bearing assembly for a motor vehicle wheel.

The hub bearing assemblies of the known type have an axis of rotation and comprise:
- a flanged hub having a central portion of cylindrical shape extending along the axis and radially delimited outwardly by a cylindrical mounting surface, and with a flange which is fixed to the central portion, is positioned transversely with respect to the axis and has a shoulder having an annular bearing surface connected to the cylindrical mounting surface by a curved fillet;
- a bearing unit having a stationary radially outer ring, two radially inner rings placed adjacent to each other axially and being mounted on the cylindrical surface of the tubular portion, and two series of balls arranged between the radially outer ring and the radially inner rings.

In the assemblies of the type described above, so that the inner ring placed on the axially outer side may bear against the shoulder, a radius of curvature of the curved fillet must always have dimensions smaller than the dimensions of a radius of curvature of an inner edge of the inner ring arranged so as to bear against the shoulder. Therefore, in order to allow use of the same flanged hub with a wide range of bearing units, the radius of curvature of the curved fillet is formed with dimensions which are as small as possible.

However, the base of the flange of the flanged hub is one of the zones of the hub bearing assembly where there is a high concentration of forces since the tensions arising from the flexural stresses reach precisely at this point very high values which are all the greater the smaller the dimensions of the radius of curvature of the curved fillet. Therefore, in order to improve the structural strength of the flanged hub in the presence of radii of curvature of the curved fillet having small dimensions, the flanged hub is subjected beforehand to a tempering heat treatment which, moreover, inevitably deforms the cylindrical mounting surface on which the inner rings of the bearing unit are mounted. It is therefore necessary to perform a subsequent grinding operation in order to eliminate the defects with regard to roundness of the cylindrical mounting surface, in order to obtain a precise fit between the hub and the inner rings.

The heat treatment and the subsequent grinding increase significantly the production costs of the hub bearing assembly, while the inter-dependence between the radii of curvature of the curved fillet and the inner edge of the inner ring limit considerably the freedom of use of the same hub wheel hub with different bearing units.

### SUMMARY OF THE INVENTION

The object of the present invention is to provide a hub bearing assembly which has lower production costs and may be used with a wide range of bearing units. This object, together with other objects and advantages, which will be understood more clearly below, is achieved according to a first aspect of the present invention by a hub bearing assembly having the characteristic features defined in Claim 1. Preferred embodiments of the invention are defined in the dependent claims.

### BRIEF DESCRIPTION OF THE DRAWINGS

The invention will now be described with reference to the accompanying figure which shows an axially sectioned view of a preferred embodiment provided by way of a nonlimiting example of a hub bearing assembly for a motor vehicle wheel according to the invention.

### DETAILED DESCRIPTION OF PREFERRED EMBODIMENTS

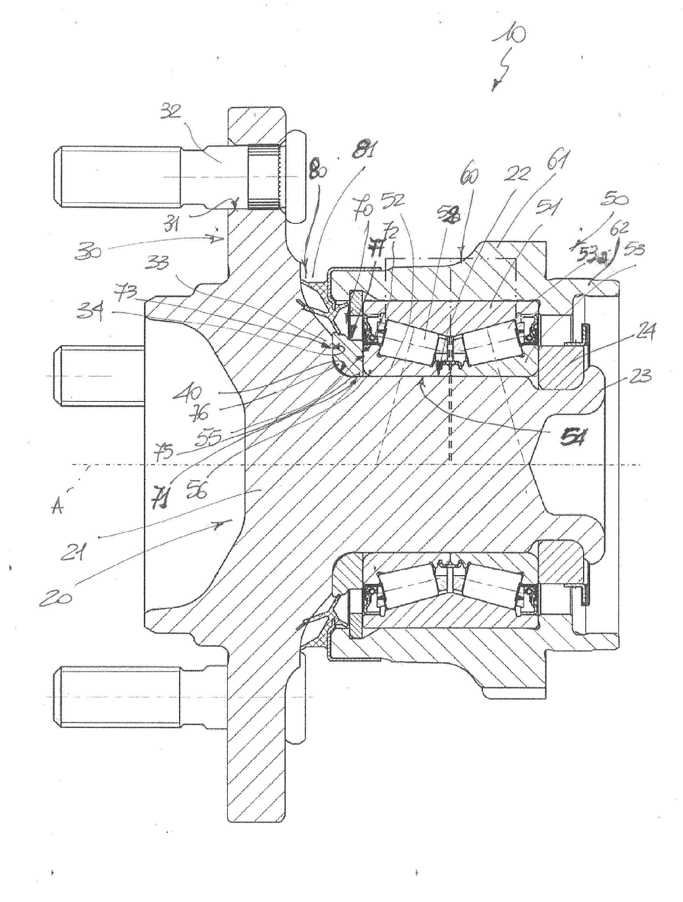

With reference to the accompanying figure 10 denotes in its entirety a hub bearing assembly for a motor vehicle wheel according to the present invention. The hub bearing assembly 10 has an axis of rotation A and comprises a flanged hub 20 having a central portion 21 of cylindrical shape, extending along the axis A, and a flange 30 which extends radially outwardly from one end of the central portion 21, being fixed to the central portion 21 itself, and has a plurality of axial holes 31 for bolts 32 for mounting the wheel (not shown).

The central portion 21 is radially delimited outwardly by a cylindrical mounting surface 22 coaxial with the axis A, while the flange 30 is arranged transversely with respect to the axis A and has a shoulder 33 having an annular bearing surface 34 connected to the cylindrical mounting surface 22 by means of a curved fillet 40 having a radius of curvature 40r.

The hub bearing assembly 10 also comprises a bearing unit 50 having a stationary radially outer ring 51, two radially inner rings 52 and 53 placed adjacent to each other axially and mounted on the cylindrical surface 22, and a series of rolling members 52a and 53a (in this example tapered rollers) arranged radially between the ring 51 and the radially inner rings 52 and 53, respectively. In the example of embodiment shown, the radially outer ring 51 is inserted inside a cylindrical sleeve 60 having a flange 61 and a collar 62 for mounting the hub bearing assembly 10 in an upright of a suspension (not shown). However, the following is applicable without any limitation also to the case where the radially outer ring 51 has directly a respective flange and a respective collar for mounting the hub bearing assembly 10 in an upright of a suspension (not shown) and has, furthermore, two series of spherical or roller-type rolling members, and also, alternatively, a series of spherical rolling members and a series of tapered-roller rolling members.

In the bearing unit 50 described above, the ring 52, of the two rings 52 and 53, is arranged in a position axially closer to the annular bearing surface 34 than the ring 53 which, instead, is axially locked on the opposite side to the ring 52 by an axial locking element 23.

In the example of embodiment shown in the accompanying figure, the locking element 23 locks and prestresses axially the rings 52 and 53 on the hub 20 and is preferably defined by an axially inner end of the central portion 21 which is plastically deformed, usually by means of orbital rolling against a spacer 24, which is mounted on the central portion 21 and arranged axially in contact with the ring 53. However, still for the purposes of prestressing or in any case axially locking the rings 52 and 53 onto the cylindrical surface 22, the locking element 23 may also be defined by a threaded washer (not shown) which is screwed onto the central portion 21 instead of the spacer 24.

The ring 52 of the bearing unit 50 has an inner cylindrical surface 54 mounted on the cylindrical mounting surface 22 and, on the side facing the flange 30, an annular support surface 55 connected to the cylindrical surface 54 by means of a rounded inner edge 56, a radius of curvature 56r thereof having dimensions independent of the dimensions of the radius of curvature 40r, namely the bearing unit 50 and the hub 20 of the hub bearing assembly 10 according to the present invention may, as will be explained also below, be chosen independently of each other and, in particular, without taking into account the relative dimensions of radii of curvature 40r and 56r.

Precisely in order to render the choice of the bearing unit 50 independent of the hub 20, or more specifically, in order to render the dimensions of the radius 40r independent of the dimensions of the radius 56r and vice versa, the hub bearing assembly 10 comprises a spacer 70 which is mounted on the cylindrical surface 22 of the central portion 21 in an intermediate position between the shoulder 33 and the ring 52 and is axially enclosed in a package by the locking element 23 between the shoulder 33 and the ring 52.

The spacer 70 is an intermediate annular element and is delimited radially inwardly by a cylindrical surface 71 mounted on the cylindrical mounting surface 22, while it is axially delimited, on the side facing the inner ring 52, by a respective annular bearing surface 72 and, on the side facing the shoulder 33, by a respective support surface 73. Both the annular bearing surface 72 and the support surface 73 are annular surfaces perpendicular to the axis A, but while the bearing surface 72 forms with the cylindrical surface 71 a straight edge 75 and intercepts the cylindrical surface 22 at an angle of 90°, the support surface 73 is connected to the cylindrical surface 71 by means of a curved edge 76 having a radius of curvature 76r with dimensions such that the dimensions of the radius of curvature 40r of the curved fillet 40 remain sufficiently large to reduce the concentration of forces at the base of the flange 30. In particular, the dimensions of the radius of curvature 76r of the edge 76 are always greater than the dimensions of the radius of curvature 40r of the curved fillet 40 so as to allow always axial contact between the bearing surface 34 and the support surface 73, ensuring continuity in both mechanical and assembly terms for all the components which are mounted in series on the central portion 21 and axially enclosed in a package in relation to each other and between the shoulder 33 and the element 23, namely for the spacer 70 and the radially inner rings 52 and 53.

Moreover, the spacer 70 not only allows the dimensions of the radius of curvature 40r to remain sufficiently large to reduce the concentration of forces at the base of the flange 30, but also allows the reduction and the more uniform distribution of the contact pressures and tensions in the zone of the hub 20 at the base of the flange 30 compared to the prior art, with the result that the conventional heat treatment and subsequent corrective treatment are no longer necessary and may therefore be dispensed with, with a consequent reduction in the production costs of the hub bearing assembly 10. In other words, by using the spacer 70 it is possible to provide radii of curvature 40r and 76r which are standardized and independent of the type of bearing unit 50, namely, within the mechanical constraints imposed by the surrounding conditions, such as wheel diameter or dimensions of the suspension, loads on the vehicle axle, etc., it is possible to mount any bearing unit 50 on the central portion 21 of the hub 20.

Further advantages offered by the presence of the spacer 70 arise from the fact that, while the radial dimensions of the surface 34 and the surface 55 are also limited and conditioned, the radial dimensions of the spacer 70 are to a certain extent freer and, where suitably defined, allow better distribution of the compressive loads due to prestressing of the element 23.

In particular, the bearing surface 72 is an axially arranged, flat, annular surface next to which the ring 52 is arranged with its support surface 55, and has a radial width with dimensions at least greater than a radial width of the support surface 55 so as to present to the ring 52 itself an axial support of sufficient width to prevent any plastic deformation, the spacer 70 and the two rings 52 and 53, as described above, being enclosed in a package against the shoulder 33.

The support surface 73 is a flat annular surface arranged so as to axially bear against the bearing surface 34 of the shoulder 33 and projects radially beyond the bearing surface 34 itself, making it possible to achieve a maximum annular contact area between the surfaces 34 and 73 with an improved distribution of the axial loads.

If the hub bearing assembly 10 is also provided with a sealing element 80 arranged so as to close a gap 81 situated between the flange 30 and the ring 51 or the cylindrical sleeve 60, the spacer 70 advantageously comprises, for the purposes of a better performance in terms of both the geometry of the sealing element 80 and the efficiency of the sealing element 80 itself, a shaped outer connecting surface 77 which connects together the support surface 73 and the bearing surface 72 and is arranged with frictional contact in the hub bearing assembly 10.

It is understood that the invention is not limited to the embodiment which is described and illustrated here and which is to be regarded as an exemplary embodiment of the hub bearing assembly; the invention is instead subject to further modifications as regards the forms and arrangements of parts and constructional and operating details.

## Claims

1. Hub bearing assembly (10) for a motor vehicle wheel, the hub bearing assembly (10) having an axis of rotation (A) and comprising:
- a flanged hub (20) having a central portion (21) of cylindrical shape extending along the axis (A) and radially delimited outwardly by a cylindrical mounting surface (22), and with a flange (30) which is fixed to the central portion (21), is positioned transversely with respect to the axis (A), and has a shoulder (33) having an annular bearing surface (34) connected to the cylindrical mounting surface (22) by a curved fillet (40); and
- a bearing unit (50) having a first radially inner ring (52) and a second radially inner ring (53), these rings being placed adjacent to each other axially and being mounted on the cylindrical mounting surface (22), the first radially inner ring (52) being placed in a position nearer to the annular bearing surface (34) than the second radially inner ring (53);
the hub bearing assembly (10) being **characterized in that** it comprises an intermediate element (70), which is mounted on the cylindrical mounting surface (22) in an intermediate position between the annular bearing surface (34) and the first radially inner ring (52), and which comprises, in turn, a further annular bearing surface (72) which is transverse with respect to the axis (A) and to the cylindrical mounting surface (22) and which is placed in direct contact with the first radially inner ring (52).

2. Hub bearing assembly according to Claim 1, **characterized in that** the intermediate element (70) is placed so as to bear axially on the annular bearing surface (34) of the shoulder (33), and is provided, on the side facing the shoulder (33), with an edge (76), one of whose radii of curvature (76r) has dimensions such that the dimensions of a radius of curvature (40r) of the curved fillet (40) remain sufficiently large to reduce the concentration of forces at the base of the flange (30); the first radially inner ring (52) being provided, on the side facing the intermediate element (70), with a corresponding further edge (56), one of whose radii of curvature (56r) has dimensions independent of the dimensions of the radius of curvature (40r) of the curved fillet (40).

3. Hub bearing assembly according to Claim 2, **characterized in that** the dimensions of the radius of curvature (76r) of the edge (76) of the intermediate element (70) are greater than the dimensions of a radius (40r) of curvature of the curved fillet (40).

4. Hub bearing assembly according to Claim 2 or 3, **characterized in that** the further annular bearing surface (72) is a flat surface having a radial width which is at least greater than a radial width of a support surface (55) of the first radially inner ring (52) in order to present to the first radially inner ring (52) an axial support of sufficient width to prevent any plastic deformation, the intermediate element (70) and the first and the second (53) radially inner ring being enclosed in a package against the shoulder (33).

5. Hub bearing assembly according to Claim 4, **characterized in that** the intermediate element (70) comprises a further support surface (73), which is adjacent to the corresponding edge (76), and, preferably, projects radially beyond the bearing surface of the shoulder (33).

6. Hub bearing assembly according to Claim 5, **characterized in that** the intermediate element (70) comprises a shaped outer surface (77) for connection between the further support surface and the further bearing surface; the shaped surface (77) being placed in frictional contact with a sealing element (80) of the hub bearing assembly (10).
